# EUROPEAN PATENT APPLICATION

(11) **EP 3 834 794 A1**
(43) Date of publication of application: **16.06.2021**
(21) Application number: 20210394.1
(22) Date of filing: 27.11.2020
(51) Int. Cl.: A61G 5/04

(54) **PROTECTION APPARATUS AND METHOD FOR AN ELECTRIC WHEELCHAIR**

(30) Priority: 11.12.2019 GB 201918197
(71) Applicant: Penny & Giles Controls Limited, Aviation Park West Bournemouth Airport Christchurch, Dorset BH23 6HH (GB)
(72) Inventor: PECK, John Hamish, Christchurch, Dorset BH23 6HH (GB)
(74) Representative: D Young & Co LLP

(57) **Abstract**

Methods and circuitry for protecting control electronics of an electric wheelchair are disclosed. A measurement circuit generates a measurement of the current in a current pathway. Control circuitry switches an electrical switch from a first state which allows the current to flow to a second state which suppresses current flow in response to the measurement of the current exceeding a threshold current for more than a predetermined trip time. A trip time taken between the measurement of the current reaching the threshold current and the electrical switch changing from the first state to the second state is less than 100 microseconds and the threshold current is greater than 8 Amperes.

## Description

### Field of the invention

The present techniques relate to the rapid suppression of current in the control electronics of electric wheelchairs.

### Background

The control electronics for electric wheelchairs perform a large number of functions and operate at a range of voltages and currents. The electrical control and power signals that are required to implement these electronics are typically routed throughout the wheelchair including throughout moving or articulating parts. Therefore, there is the risk that cables can be pinched or crushed creating the potential for a permanent short circuit between the battery supply and zero volts. This can be detected and prevented as a permanent short circuit will cause a large current to flow for a substantial period of time. This sustained flow of current is sufficient, for example, to trip a fuse. However, if the short circuit is not permanent and the wires only touch together very briefly, enough energy is available to create a significant arc, but the duration may not be long enough to trip the fuse. This situation could for example occur when driving over uneven ground or in a rehab type wheelchair in which there is a lot of articulation leading to a situation where the conductors may be briefly touched together during part of an actuator movement. If this situation repeats then eventually a substantial carbon track can form which presents a significant fire risk.

One approach to overcoming this is to provide two current paths. The first provides a high current path for charging the vehicle's battery and the second provides a low current path for powering the low power loads such as the joystick, for example. The low current path is not at risk from generating a high current short circuit due to the restrictions on the supply current and the high current path can be restricted to parts of the wheelchair that are not moving. However, this approach is not suitable for a rehab wheelchair system where the actuator drivers and other modules on the network can draw several Amperes each.

Therefore, a system is required that enables a high current to be delivered throughout the electric wheelchair whilst ensuring that any short circuits are suppressed sufficiently quickly that there is no substantial formation of a carbon track.

### Summary

In one example embodiment there is protection circuitry for control electronics of an electric wheelchair comprising: a current pathway configured to conduct a current; a measurement circuit configured to generate a measurement of the current; an electrical switch, connected in series to the current pathway, having a first state in which the current can flow through the electrical switch and a second state in which current flow through the switch is suppressed; and control circuitry configured to switch the electrical switch from the first state to the second state in response to the measurement of the current exceeding a threshold current for more than a predetermined trip time, wherein a trip time taken between the measurement of the current reaching the threshold current and the electrical switch changing from the first state to the second state is less than 100 microseconds, and wherein the threshold current is greater than 8 Amperes.

In one example embodiment there is a method of protecting control electronics of an electric wheelchair comprising: generating a measurement of a current flowing through a current pathway; and controlling an electrical switch, connected in series to the current pathway, to switch from a first state to a second state in response to the measurement of a current exceeding a threshold current for more than a predetermined trip time, wherein, when in the first state, the electrical switch allows current to flow, and when in the second state, the electrical switch suppresses the current flow, wherein a trip time taken between the measurement of the current reaching the threshold current and the electrical switch changing from the first state to the second state is less than 100 microseconds, and wherein the threshold current is greater than 8 Amperes.

In one example embodiment there is means for protecting control electronics of an electric wheelchair comprising: means for generating a measurement of a current flowing through a current pathway; means for controlling an electrical switch, connected in series to the current pathway, to switch from a first state to a second state in response to the measurement of a current exceeding a threshold current for more than a predetermined trip time, wherein, when in the first state, the electrical switch allows current to flow, and when in the second state, the electrical switch suppresses the current flow, wherein a trip time taken between the measurement of the current reaching the threshold current and the electrical switch changing from the first state to the second state is less than 100 microseconds, and wherein the threshold current is greater than 8 Amperes.

### Brief description of the drawings

The present techniques will be described further, by way of example only, with reference to embodiments thereof as illustrated in the accompanying drawings, in which:
Figure 1 schematically illustrates protection circuitry which may embody various examples of the present techniques;
Figure 2 schematically illustrates an overview of a modular control system which may embody various examples of the present techniques;
Figure 3A schematically illustrates control circuitry which may embody various examples of the present techniques;
Figure 3B schematically illustrates control circuitry which may embody various examples of the present techniques;
Figure 4A schematically illustrates protection circuitry which may embody various examples of the present techniques;
Figure 4B schematically illustrates protection circuitry which may embody various examples of the present techniques;
Figure 4C schematically illustrates protection circuitry which may embody various examples of the present techniques;
Figure 5 schematically illustrates protection circuitry which may embody various examples of the present techniques;
Figure 6 illustrates the current associated with initialising the control circuitry which may embody various examples of the present techniques;
Figure 7 illustrates the current associated with a intermittent short circuit which may embody various examples of the present techniques;
Figure 8 schematically illustrates protection and control circuitry which may embody various examples of the present techniques;
Figure 9 shows a sequence of sequence of steps that are carried out in some of the embodiments of the present techniques.

### Detailed description

At least some embodiments provide protection circuitry for control electronics of an electric wheelchair comprising: a current pathway configured to conduct a current; a measurement circuit configured to generate a measurement of the current; an electrical switch, connected in series to the current pathway, having a first state in which the current can flow through the electrical switch and a second state in which current flow through the switch is suppressed; and control circuitry configured to switch the electrical switch from the first state to the second state in response to the measurement of the current exceeding a threshold current for more than a predetermined trip time, wherein a trip time taken between the measurement of the current reaching the threshold current and the electrical switch changing from the first state to the second state is less than 100 microseconds, and wherein the threshold current is greater than 8 Amperes.

The control electronics for an electric wheelchair are driven by a current source, which is routed through the components of the wheelchair. Where the current pathway is routed through a moving part of the wheelchair there is a risk that cables carrying the current may be damaged. If a cable carrying a current is, say, crushed or pinched to create a permanent short circuit between the current source and zero volts, then a large fault current will flow continuously. This fault current can be used to trip a resettable fuse. However, if the short circuit is not permanent and the wires only touch together very briefly enough energy is available to create a significant arc but the duration is not long enough to trip a fuse. This situation could for example occur when driving over uneven ground or in a rehab type wheelchair where there is a lot of articulation and the conductors may briefly touch together during part of an actuator movement which traps a cable. If this situation repeats eventually a substantial carbon track will form which presents a significant fire risk.

In order to mitigate this risk the control electronics provide a smart fuse that comprises an electrical switch that switches from a first state in which current can flow to a second state in which current flow is suppressed in response to detecting the flow of a current greater than greater than 8 Amperes. In some embodiments the control electronics monitor the return current flowing in the current pathway. In order to prevent the build up of a substantial carbon track the electrical switch is configured to switch from the first state to the second state in less than 100 microseconds. By switching from the first state to the second state in a time less than 100 microseconds the build up of carbon is substantially reduced and the risk of fire is mitigated. Extensive testing has shown that currents below 20 Amperes do not have the capability to heat the typical copper conductors which are used in this context enough to cause significant melting, and hence arc formation, although a very small arc can still occur. In a temporary short circuit situation the current can climb above 20 Amperes very quickly depending on the quality of the short circuit and in this case it is essential to shut the current off within a few tens of microseconds of the excess current occurring. This minimises the heating effect and keeps the melting associated arcing to a benign level.

In some embodiments the protection circuitry further comprises a fuse connected in series with the current pathway, wherein the fuse is configured to break the circuit when the current in the current pathway passes a further threshold current for a slow trip time, and wherein the trip time is substantially shorter than the slow trip time. The fuse may be any type of resettable fuse including one or more poly fuses connected either in series of in parallel to each other. The resettable fuse will trip and protect the system in the event of a permanent short circuit between the power conductors. However, typical resettable fuses take a significant amount of time to trip and therefore will not protect effectively against intermittent short circuit faults as large intermittent arcs could still occur without tripping the fuse.

In some embodiments the control circuitry further comprises a threshold setting input, wherein the threshold current is dependent on the threshold setting input. This provides a flexible approach to current suppression. The method by which the threshold current is set is not particularly limited. In some embodiments the threshold is directly set using hardware, either as a fixed threshold current or as an adjustable threshold that can be configured by a user or service engineer. In some embodiments the current threshold can be reconfigured by software either implemented on the control circuitry of the electric wheelchair or externally to the electric wheelchair.

In some embodiments the control circuitry is arranged such that when in the second state the electrical switch is configured to suppress current flow in the current pathway in a first direction and to permit current flow in the current pathway in a second direction. When the electric wheelchair is connected to an external charging apparatus, the current through the current pathway will typically flow in the opposite direction to when the wheelchair is in normal use. By allowing current flow in the second direction the electrical switch and, hence, the smart fuse is bypassed in this configuration. If however, a short circuit occurs during charging then two separate high current loops will form. The first will be due to current drawn from the external charging apparatus, which will typically have its own short circuit prevention. The second will be from the power source within the electric wheelchair. In this case current will flow from the power source in the first direction and, therefore, the smart fuse will operate to suppress the current.

In some embodiments the protection circuitry is configured, when the measurement of the current changes from a value below the threshold current to a value above the threshold current, to hold the electrical switch in the first state in response to one or more predefined conditions being true. In this way the operation of the smart fuse can be effectively bypassed when any of the one or more predetermined conditions are true. For example, using this technique it would be possible to test the response of the circuitry to high loads for diagnostic or system testing purposes. In some embodiments this feature would enable the effect of current suppression, by the additional one or more fuses of poly fuses, to be tested. This would not be possible without the option to suppress the smart fuse as the smart fuse trip time is significantly shorter than the fuses or poly fuses and, in response to a large current, the smart fuse would always trip first.

In some embodiments the one or more conditions comprise an initialisation phase of the protection circuitry. The control systems for an electric wheelchair may comprise an associated capacitance that is the combined capacitance of the individual components within the electronics for the electric wheelchair. When a power source is first connected there will be a short time during which the capacitances are charged. During this period the various capacitances will combine to present a very low resistance load that appears from an electrical point of view to be similar to a short circuit. As the capacitances charge the current flow will decrease and eventually reach a very low level once the system has charged. During this initialisation phase of the protection circuitry the electrical switch is held in the first state to allow the current to flow. Once the current drops below an initialisation threshold the smart fuse is enabled and the electrical switch is able to switch from the first state to the second state. The method by which it is detected that the current has dropped below the initialisation threshold can be any known in the art. This could be through direct measurement of the current, or based on a known time that corresponds to how long the initialisation phase would take.

In some embodiments the control circuitry is configured, when the measurement of the current changes from the value below the threshold current to the value above the threshold current, to hold the electrical switch in the first state for a first predefined period of time. This provides the option for the smart fuse to temporarily override the decision to switch from the first state to the second state in response to the current increasing above the threshold current. Such a feature could be used to implement testing of the one or more fuses or poly fuses or to determine diagnostic information relating to the system.

In some embodiments the control electronics is a modular control system comprising a plurality of modules, wherein each of the plurality of modules is user-selectably connected to at least one other of the plurality of modules via one or more cables external to each of the plurality of modules, wherein each cable of the one or more cables comprises a plurality of electrically isolated conductive pathways, a first connector and a second connector, wherein the first connector and the second connector are electrically connected at opposing ends of the cable to the plurality of electrically isolated conductive pathways, and wherein the current pathway is provided by at least one electrically isolated conductive pathway of the plurality of electrically isolated conductive pathways. This modular approach allows the user flexibility when selecting the modules to incorporate into the wheelchair. In some embodiments only a subset of the electrically isolated conductive pathways will require protection via the smart fuse. However, in other embodiments all the modules may require protection via the smart fuse.

In some embodiments the trip time and threshold current are such that no substantive melting of insulation material between the plurality of electrically isolated conductive pathways occurs for: currents below the threshold current, and for transient current spikes lasting for less than the trip time. Transient spikes can occur if a non-permanent short circuit develops in which wires touch together very briefly. This could occur when driving over uneven ground or in a rehab type wheelchair where there is a lot of articulation and the conductors briefly touch together during part of an actuator movement. If such a situation were to repeat then eventually the insulating material between the plurality of electrically isolated conductive pathways would melt and a substantial carbon track would form which presents a significant fire risk. Therefore, the trip time for the smart fuse is designed to be sufficiently short that only transient spikes that are sufficiently short so as to not cause heating, and hence the melting of the insulating material, are acceptable.

In some embodiments the control circuitry is further configured, in response to switching the electrical switch from the first state to the second state, to hold the electrical switch in the second state for a second predefined period of time. In situations where the conductors were rapidly making contact for a very brief period of time, for example in an environment in which there was a lot of vibration, the implementation of a time delay would prevent the electrical switch from repeatedly enabling and tripping. The predefined period of time is not limited and may be of the order of milliseconds or seconds. In some embodiments the second predefined period of time is several hundred milliseconds.

In some embodiments the protection circuitry further comprises test circuitry configured to: apply a test current through the current pathway when the electrical switch is in the first state; generate a first test measurement of the test current; to set an error indication when the first test measurement is outside of a given tolerance of the test current; and to clear the error indication when the first test measurement is within a given tolerance of the test current.

When the protection circuitry for the electric wheelchair is initialised the smart fuse may be tested to ensure correct performance. In particular, a precise known test current may be applied through the current pathway. In some embodiments the precise known test current is 1.4 Amperes. This current is measured to confirm the correct functionality of the current measurement. If the test measurement is within a given tolerance then the current measurement circuit is considered to be working correctly and the error indication is cleared. However, if the test measurement is outside of a given tolerance then the current measurement circuitry is considered to be not working correctly and the error indication is set. In some embodiments different test currents will be applied to test the measurement circuitry across a range of different currents.

In some embodiments the protection circuitry is further configured to: apply the test current through the current pathway when the electrical switch is in the second state; generate a second test measurement of the test current; to set the error indication when the second test measurement is substantially non-zero; and to clear the error indication when the second test measurement is substantially zero.

Once the ability of the protection circuitry to accurately measure currents has been verified, the ability of the circuit to suppress current is thus measured. In particular the electrical switch is put into the second state, thereby suppressing the current that can pass through the current pathway. The second test measurement of the current is then obtained. If the electrical switch is operating correctly then there should be substantially zero current flowing through the current pathway. If this is not the case then the error indication is set.

In some embodiments the protection circuitry is further configured to hold the electrical switch in the second state when the error indication is set. In this way current is completely suppressed once an error has been detected. In some embodiments the electrical switch may remain in the second state till an external reset is applied to the system.

In some embodiments the current pathway comprises a resistor and the measurement circuit is configured to generate the measurement of the current based on a voltage across the resistor when the current flows through the resistor, and wherein the control circuitry comprises: an amplification circuit configured to output an amplified voltage corresponding to the voltage across the resistor amplified by a predefined factor; and a comparator circuit configured to compare the amplified voltage with a known voltage corresponding to the threshold current, wherein the control circuitry is configured to control the electrical switch to be in the first state when the amplified voltage is less than the threshold voltage, and wherein the control circuitry is configured to control the electrical switch to be in the second state when the amplified voltage is greater than the threshold voltage.

The choice of the resistor is not particularly limited. However, the current in the current pathway passes through the resistor. Therefore, a larger resistor will increase the overall resistance of the current pathway. Hence, the resistor will typically be a smaller resistor of known resistance. The voltage across the resistor, determined through Ohm's law, will therefore be very small. Hence, before the voltage generated across the resistor is compared to a known value, the voltage is amplified through an amplification circuit. The output of the amplifier is then compared to the known voltage using a comparator circuit. If the output of the comparator circuit indicates that the voltage generated across the resistor is larger than the known voltage then it is determined that the current is greater than the threshold current and the electrical switch is switched to be in the second state. If however, the comparator indicates that the voltage generated across the resistor is smaller than the known voltage then it is determined that the current is lower than the threshold current and the electrical switch remains in the first state.

In some embodiments the control circuitry is further configured such that the threshold voltage can be controlled based on one or more user defined parameters. This provides flexibility for the user to control the current at which the smart fuse trips and the electrical switch changes from the first state to the second state. In particular, the user can provide information relating to the voltage or current at which the smart fuse trips. Alternatively, the user could provide the length of time for which the electrical switch is held in the second state once a current above the threshold current has been detected.

In some embodiments the measurement circuit is configured to generate the measurement of the current when the electric wheelchair is in an on state and when the electric wheelchair is in an off state. The protection circuitry is active and acts to protect the control electronics regardless as to whether the electric wheelchair is turned on or off. By providing protection circuitry that is independent of the state of operation of the wheelchair the potential for short circuits occurring whilst the chair is unattended are mitigated. For example, if the wheelchair were to be left with a pinched cable that did not cause a short circuit until time had passed then the protection circuitry would still be operable to detect a short circuit even if the wheelchair were not in an on state at that time.

The precise value of the trip time and the threshold current is dependent on the nature of the current protection that is required. In some embodiments the trip time is less than 30 microseconds. However, in other embodiments the trip time is less than 20 microseconds. Similarly, in some embodiments the threshold current is greater than 15 Amperes. However, in other embodiments the threshold current is greater than 17.5 Amperes. Extensive testing has shown that currents below 20 Amperes do not have the capability to heat the copper conductors enough to cause significant melting, and hence arc formation, although a very small arc can still occur. In a temporary short circuit situation the current can climb above 20 Amperes very quickly and in this case it is essential to shut off the current within a few tens of microseconds of the excess current occurring. This minimises the heating effect and keeps the melting and associated arcing to a benign level. If these conditions are violated then a much larger arc will form which sprays out material and causes the formation of dangerous carbon deposits.

In some embodiments there is provided a method of protecting control electronics of an electric wheelchair comprising: generating a measurement of a current flowing through a current pathway; and controlling an electrical switch, connected in series to the current pathway, to switch from a first state to a second state in response to the measurement of a current exceeding a threshold current for more than a predetermined trip time, wherein, when in the first state, the electrical switch allows current to flow, and when in the second state, the electrical switch suppresses the current flow, wherein a trip time taken between the measurement of the current reaching the threshold current and the electrical switch changing from the first state to the second state is less than 100 microseconds, and wherein the threshold current is greater than 8 Amperes.

In some embodiments there is provided means for protecting control electronics of an electric wheelchair comprising: means for generating a measurement of a current flowing through a current pathway; means for controlling an electrical switch, connected in series to the current pathway, to switch from a first state to a second state in response to the measurement of a current exceeding a threshold current for more than a predetermined trip time, wherein, when in the first state, the electrical switch allows current to flow, and when in the second state, the electrical switch suppresses the current flow, wherein a trip time taken between the measurement of the current reaching the threshold current and the electrical switch changing from the first state to the second state is less than 100 microseconds, and wherein the threshold current is greater than 8 Amperes.

Some particular embodiments are now described with reference to the figures.

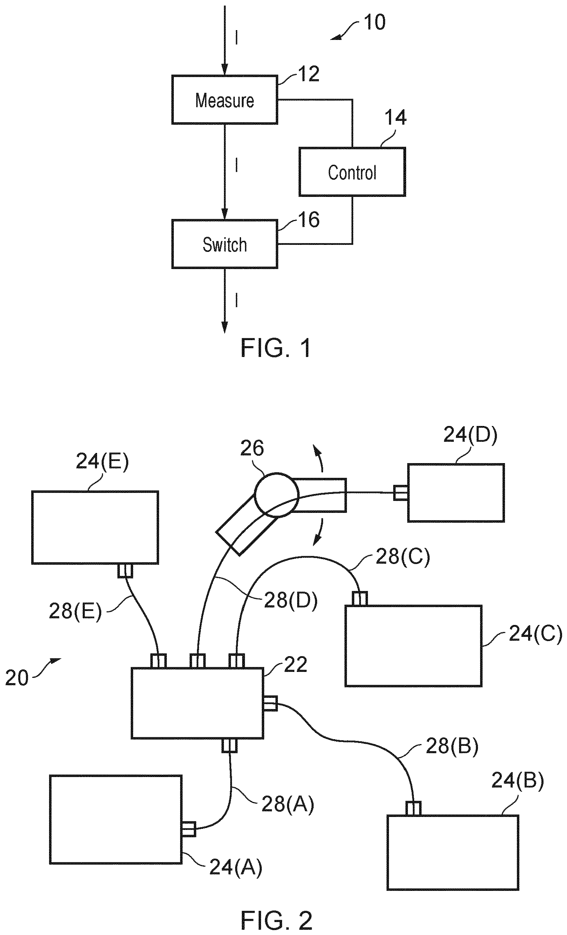

Fig. 1 schematically illustrates protection circuitry 10 that may embody various examples of the present techniques. The protection circuitry 10 comprises measurement circuitry 12, control circuitry 14, and switch circuitry 16. A current pathway carrying a current I is shown passing through the measurement circuitry 12 and through the switch circuitry 16. The measurement circuitry determines the current that flows along the current pathway and passes this information to the control circuitry 14. The switch circuitry 16 has two states: a first state in which current can flow through the switch circuitry 16 with minimal impedance and a second state in which current flow through the switch circuitry 16 is suppressed. The control circuitry 14 determines whether the measured current switches from below a predefined threshold to above a threshold current and, if so, controls the switch circuitry 16 to switch from the first state to the second state. The time taken to achieve this switch is shorter than the time that would be required for significant heating to occur and therefore is sufficiently quick to prevent substantial arcing from occurring. In some embodiments the switching time is less than 100 microseconds. In preferred embodiments the switching time is less than 30 microseconds. In particularly preferred embodiments the switching time is less than 20 microseconds. The threshold current is not particularly limited either. In some embodiments the threshold current is greater than 8 Amperes. In preferred embodiments the threshold current is greater than 15 Amperes. In particularly preferred embodiments the threshold current is greater than 17.5 Amperes. However, it will be apparent to one skilled in the art that the choice of current at which to switch is not limiting and different values could be implemented dependent on the precise nature of the circuitry that is being protected.

Fig. 2 illustrates a modular control system 20 for an electric wheelchair that may embody various examples of the present techniques. The modular control system comprises a number of different modules 24(A) - 24(E) that are connected to a central control module 22. The modules 24(A) - 24(E) are each connected to the central control module via a cable 28(A) - 28(E). It should be appreciated that this setup is purely for illustrative purpose and any number of modules may be used. It should also be appreciated that the modules do not all have to be connected directly to a central control module and could be connected linearly, in a branching configuration or in any other configuration in order to achieve the functionality required by the electric wheelchair. Some of the modules 24(A), 24(B), 24(C) and 24(E) are connected to the central control module such that the cables 28(A), 28(B), 28(C) and 28(E) do not pass through moving or articulated parts or pinch points where cable crushing would be more likely to occur. However, module 24(D) is connected such that the cable 28(D) passes through an articulated joint 26 where it would be expected that it is more likely that cable 28(D) would be crushed causing a short circuit to develop. Again it should be understood that this is purely for illustration purposes and any number of the modules could be connected via cables that pass through any number of articulated joints or pinch points. Multiple cables may also pass through the same pinch point. In addition, the circuitry protected by the smart fuse is not limited to the circuitry that passes through one or more pinch points or articulated joints and any modules that are connected in any way to the power source could be protected whether individually through a dedicated smart fuse or globally through a global smart fuse.

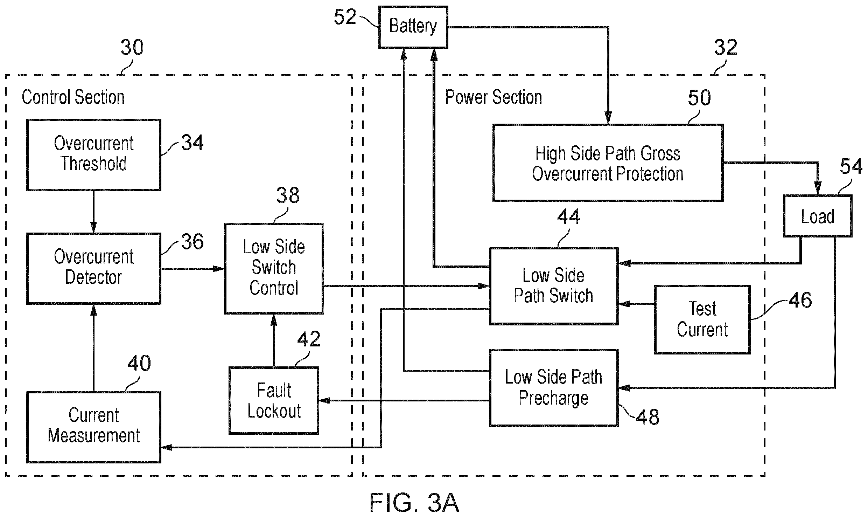

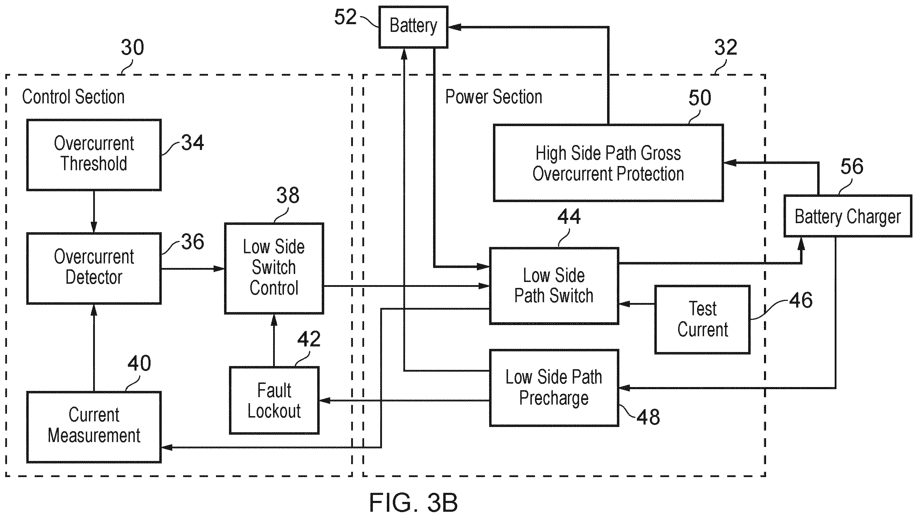

Figs. 3A and 3B show a schematic overview of the control section 30 and the power section 32 for the protection circuitry of an electric wheelchair in normal use and when charging respectively. The control section 30 is identical in Figs 3A and 3B and will be described first. The control section 30 comprises an overcurrent threshold section 34, an overcurrent detector 36, a low side switch control 38, a current measurement section 40, and a fault lockout section 42. The overcurrent threshold section 34 provides the threshold current level at which a fault current is deemed to have occurred. In some embodiments the threshold current is greater than 8 Amperes. In preferred embodiments the threshold current is greater than 15 Amperes. In particularly preferred embodiments the threshold current is greater than 17.5 Amperes. However, it will be apparent to one skilled in the art that the choice of current at which to switch is not limiting and different values could be implemented dependent on the precise nature of the circuitry that is being protected. The current may be set in hardware and/or may be reconfigured by software by connecting the overcurrent threshold section 34 to a control microcontroller (not illustrated).

The current measurement section 40 measures the current flowing through the current path. This signal is then amplified for use by the overcurrent detector 36. The overcurrent detector 36 takes the overcurrent threshold determined by the overcurrent threshold section 34 and the measured current provided by the current measurement section 40 as inputs. The output takes a first value if the current is within its normal operating range and takes a second value if the current falls outside of the normal operating range. For example the output could take the value of 1 or HIGH if the measured current is below the current threshold and a value of 0 or LOW if the current is above the current threshold. However, it should be appreciated that these values are purely for illustrative purpose and that the choices 1 or 0 and HIGH or LOW could be interchanged.

The fault lockout section 42 provides two functions. Firstly, it will not allow the current pathway to be enabled if a fault current (which will be described below) is present. In this case, large currents will not be allowed to flow. The fault current is an indication that that there is a cable fault when the battery is first connected to the system and, hence, if the fault current is present then the current path will not enable. This may be achieved by holding the electrical switch 16 in the second state. Also, if the smart fuse trips, the system will switch off. Secondly, the fault lockout section 42 implements a delay between the fault current being removed and the switching of the electrical switch back to the first state. This delay may be of a fixed duration, or it may be dependent on the voltage required or the current measured. This delay is in response to the situation in which the short circuit is caused by the conductors making frequent but brief contact (in an environment with significant vibration for example). In this case the fault lockout section 42 would ensure that the electrical switch 12 was not enabled rather than repeatedly allowing the electrical switch to switch to the first state (current flow enabled) before repeatedly tripping to the second state (current flow suppressed).

The low side control switch 48 takes inputs from the overcurrent detector 36 and the fault lockout 42. The output of the low side control switch determines whether the electrical switch is in the first state (current flow enabled), based on the overcurrent detector 36 determining that the current is within normal operating range and the fault lockout indicating that there is no detected fault, or the second state (current flow suppressed), based on either the fault lockout section determining that there is a fault or the overcurrent detector determining that the current is outside of the normal operating range.

The power section 32 comprises a low side path switch 44, a test current circuit 46, a low side path pre-charge circuit 48, a high side path gross overcurrent protection circuit 50, and a battery 52. Fig. 3A illustrates the case in which the wheelchair is in normal use and further comprises a load 54 with the current flowing clockwise from the battery 52, through the high side path gross overcurrent protection circuit 50, through the load 54, through the low side path switch 44 and back to the battery 52. In this case the short circuit protection is provided by the high side path gross overcurrent protection 50 working with the low side path switch 44. The low side path switch 44 acts to suppress short duration short circuits that would be missed by the high side path gross overcurrent protection 50. However, should a frequent short circuit occur (for example due to vibration) then the high side path gross overcurrent protection will eventually trip. Fig. 3B illustrates the case in which the wheelchair is being charged and further comprises a battery charger 56 with the current flowing anti-clockwise from the battery charger 56 through the high side path gross overcurrent protection circuit 50, through the battery 52, through the low side path switch 44 and back to the battery charger. In this case if a short circuit were to occur then two current loops would occur. The first current loop would flow clockwise (refer to Fig. 3A) and would be supplied from the battery 52 through the high side path gross overcurrent protection circuit 50, through the short circuit, through the low side path switch 44 and back to the battery, and suppression of this current would be achieved through the high side path gross overcurrent protection 50 working with the low side path switch 44. The low side path switch 44 acts to suppress short duration short circuits that would be missed by the high side path gross overcurrent protection 50. However, should a frequent short circuit occur (for example due to vibration) then the high side path gross overcurrent protection will eventually trip. The second current loop would flow from the battery charger in a counter-clockwise direction (refer to Fig. 3B). Suppression of this current would be controlled by the battery charger itself.

The low side path switch 44 comprises the electrical switch 16 and the measurement circuitry 12. The electrical switch may be implemented as a low resistance MOSFET, which provides a high current path to the battery. The measurement circuitry comprises a sense resistor fitted in series with the switch to provide an output proportional to the load current through the current path.

The high side path gross overcurrent protection circuit 50 provides a resettable fuse. This fuse will trip to protect the system in the event of a permanent short circuit in the current path. However, this fuse takes a significant amount of time to trip so will not protect effectively against intermittent short circuit faults as large intermittent arcs can still occur without tripping the device. Therefore, the high side path gross overcurrent protection circuit 50 complements the smart fuse without providing the same speed of operation.

The test current circuit 46 provides a test current of a known value that is used to test the system at start up to confirm the correct functional operation of the system. An example test sequence would be to force a precise test current through the low side path switch 44. This current is then measured by the microcontroller to confirm the correct functionality of the current measurement circuit 40. Secondly, the electrical switch 16 within the low side path switch 44 is switched to the second state in which current is suppressed. The current flowing through the low side path switch 44 is measured a second time to confirm that the electrical switch 16 has suppressed the current flow. This allows the functionality of both the current measurement circuit 40 and the low side path switch to be verified. It should be appreciated that the initialisation tests are not limited and that the two provided herein are purely for illustrative purpose.

The low side path pre-charge circuit 48 provides a controlled constant current path in series with a low capacity resettable fuse that is used to provide the initial charge for the system. As the system is charging the voltage is sensed and the fault lockout circuit 42 is active preventing the low side path switch 44 from being enabled. Once the current has settled to a very low level the fault lockout circuit 42 releases the lock and enables the low side current switch 44 to be enabled. If a cable fault is present the current would never drop below the current provided by the low side path pre-charge circuit 48. Therefore, the fault lockout circuit 42 would never release the lock and the low side path switch 44 would never become enabled.

It should be understood that the modules and circuitry illustrated in the control section 30 and the power section 32 are not limiting and any circuitry that provides the smart fuse functionality as described herein could be used.

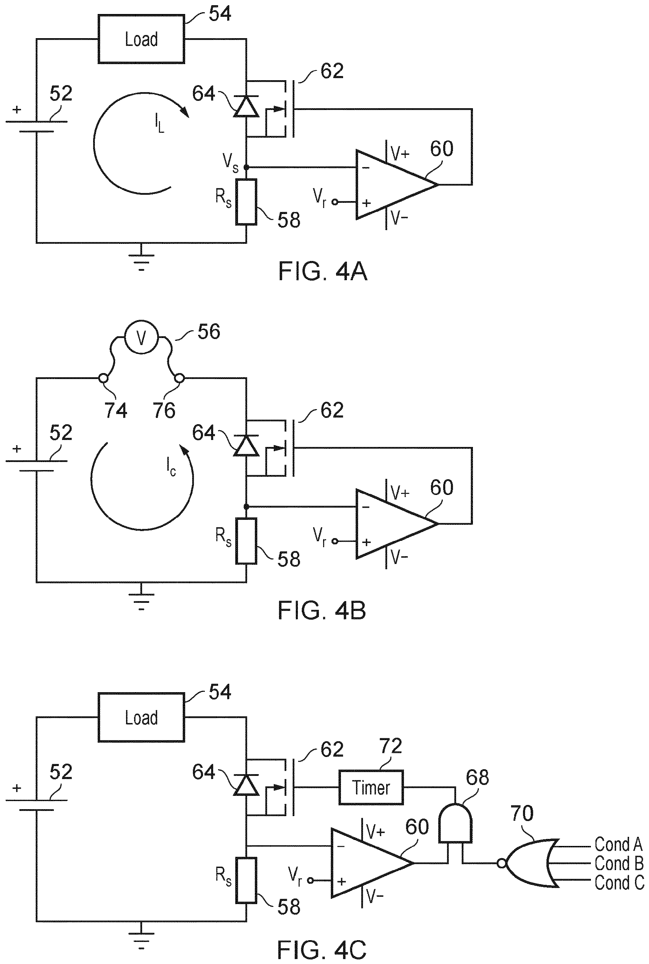

Figs. 4A-4C schematically illustrate the operation of the smart fuse. Fig. 4A illustrates the operation of the smart fuse when the wheelchair is in normal operation. A current I_{L} flows from the battery 52, through the load 54, through the low resistance MOSFET 62, through the sensing resistor 58 and back to the battery 52. The voltage relative to ground at the point Vₛ is given by Ohm's law Vₛ=I_{L}^{∗}Rₛ and is therefore proportional to the current flowing through the load. The voltage V_{S} is compared to a known voltage Vᵣ by the comparator circuit 60. The comparator circuit can be implemented in any way. However, here it is illustrated as being implemented based on an operational amplifier (op-amp) circuit. If Vₛ is greater than Vᵣ then the output of the comparator 60 takes a first value. If Vₛ is less than Vᵣ then the output of the comparator 60 takes a second value. This value is fed into the MOSFET 62 which switches from the first state in which current can flow to the second state in which current flow is suppressed in response to the comparator determining that Vₛ is greater than Vᵣ. It should be noted that the circuits illustrated in Figs. 4A-4C are intended for illustrative purpose only and the circuits can be implemented in numerous ways that are known to the skilled person.

Fig. 4B schematically illustrates the operation of the smart fuse when the wheelchair is being charged. A current I_{c} flows from the charger 56 through the battery 52, through the sensing resistor, through the diode 64 and the MOSFET 62 when the MOSFET is switched to the first state, and back to the battery 56. The presence of the diode 64 means that current is able to flow in this direction and the battery 52 is able to be charged regardless of the state in which the MOSFET is held. The diode 64 may be a body diode associated with the MOSFET 62 and/or an external diode. It is assumed therefore that the battery charger 56 regulates the current that is output during battery charging. If, during charging, a short circuit is created between the points 74 and 76 then two current loops will be formed. The first current loop would flow from the battery 52, through the MOSFET 62, through the sensing resistor 58 and back to the battery. As current can only flow through a diode in a single direction, no current will pass through the diode 64. Hence, the first current loop will be suppressed as described with relation to Fig. 4A. The second current loop will be suppressed by the current suppression systems present in the battery charger.

Fig. 4C illustrates schematically the control of the smart fuse subject to a series of conditions. Fig. 4C differs to Fig. 4A due to the presence of a timer circuit 72, logical AND gate 68, and logical NOR gate 70. The logical AND gate 68 determines that the MOSFET 62 will only switch from the second state in which current does not flow to the first state in which current flows when none of conditions Cond A, Cond B, or Cond C are at a logical 1. These conditions could correspond to lockout conditions, user controlled conditions or initialisation conditions that hold the MOSFET in the second state in which current does not flow. In addition the timer circuit 72 holds the MOSFET 62 in a given state for a predetermined amount of time either for initialisation purposes or to prevent frequent switching of the MOSFET between the two states, for example in response to vibration.

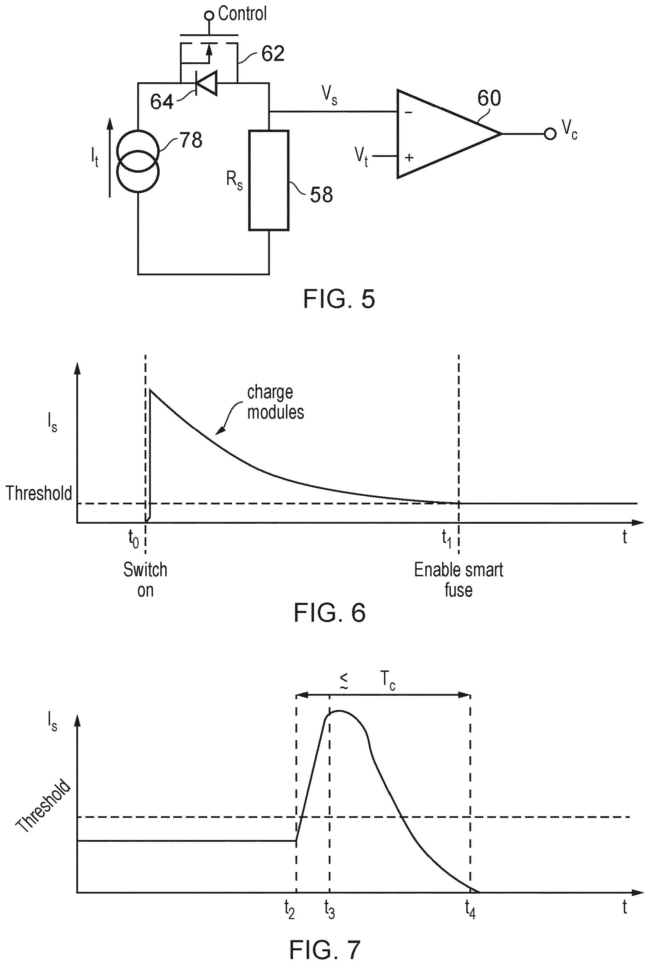

Fig. 5 illustrates the application of a test current It to verify that the current measurement circuit is operating correctly. A constant current source 78 provides a known current Iₜ which flows through the MOSFET 62, which is initially held in the first state where current is allowed to flow. The current then flows through the sensing resistor 58 with resistance Rₛ and generates a voltage Vₛ=Iₜ^{∗}Rₛ, which corresponds to the known test current. The test current is compared to a known voltage Vₜ to determine whether the measured test voltage Vₛ is sufficiently close to the test voltage Vₜ. Once the ability of the circuitry to measure current has been verified the MOSFET is switched to the second state in which current is not allowed to flow and the new voltage is compared to zero to determine that the MOSFET is able to suppress the current.

Fig. 6 illustrates schematically the current drawn by the modules of the control circuitry of the electric wheelchair when electric wheelchair is initially switched on as a function of time. At time t₀ the electric wheelchair is initially connected to a power source. At this time the modules are assumed to not be fully charged. Initially, a large current is drawn as the modules start to charge. As the modules charge the current will decay until it drops below a threshold current. Once it is detected that the current has dropped below the threshold current the smart fuse is enabled at time t₁ by switching the electrical switch from the second state in which current is suppressed to the first state in which current is able to flow.

Fig. 7 illustrates schematically the current drawn through the smart fuse in the event of a short circuit as a function of time. Initially a steady current is being drawn by the electric wheelchair. At time t₂ a cable is crushed, which causes a short circuit and a large current to be drawn. This can be seen as the current quickly ramps up after t₂. The smart fuse senses, based on the aforementioned methods, that the current has passed above a threshold and the electrical switch switches from the first state in which current can flow to the second state in which current is suppressed. When this occurs (at t₃) the current is seen to quickly drop to a safe value. The time in which the current is suppressed is less than T_{c}. In some embodiments T_{c} is less than 100 microseconds. In preferred embodiments T_{c} is less than 30 microseconds. In particularly preferred embodiments T_{c} is less than 20 microseconds.

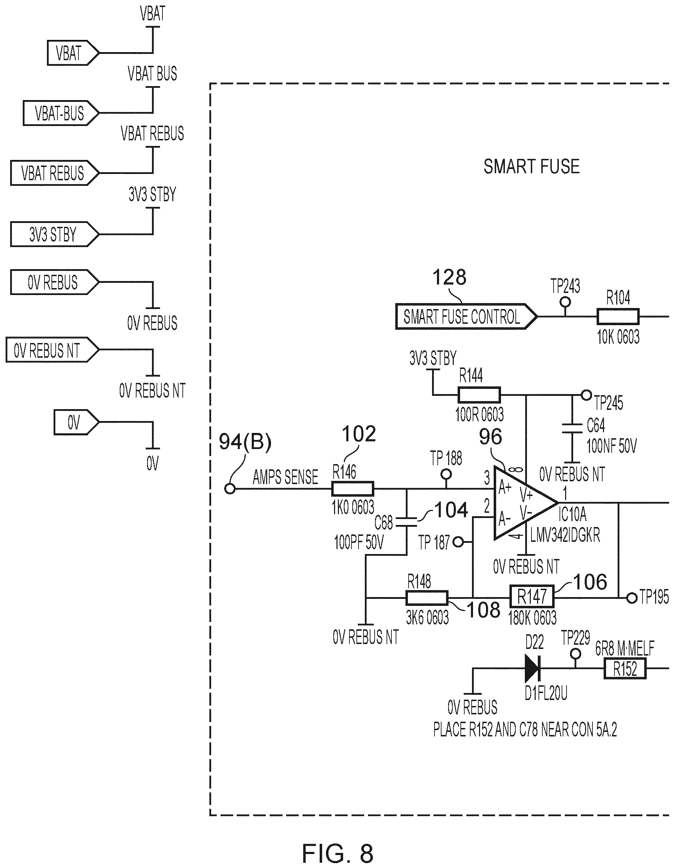

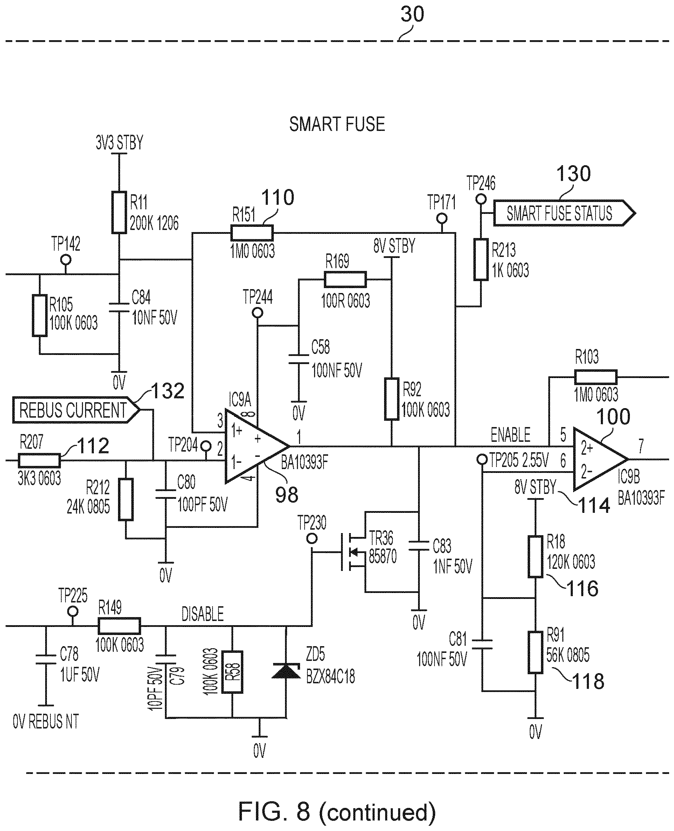

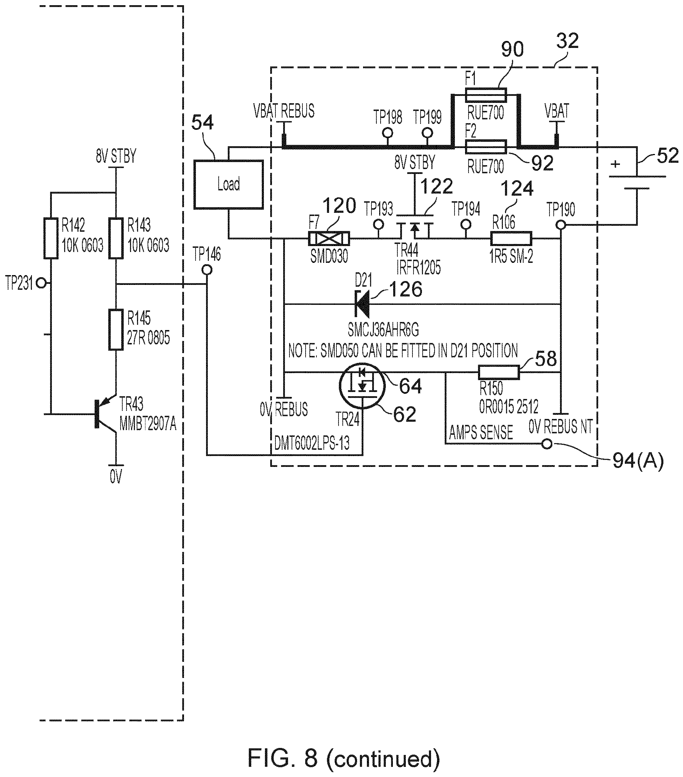

Fig. 8 schematically illustrates a circuit diagram for some embodiments of the smart fuse, the main components of which will be described here. The smart fuse comprises a control section 30 and a power section 32 indicated by the dashed lines. The power section 32 comprises a high side path gross overcurrent protection section which comprises poly fuses 90 and 92 connected in parallel. It should be appreciated however that this is only one example and any arrangement of poly fuses or fuses can be combined in series, parallel or a combination of parallel and series to form a fuse that trips at the appropriate threshold current required based on the particular modules implemented in the electric wheelchair. The power section 32 further comprises a sense resistor 58 and an electric switch 62. In these embodiments the electric switch 62 is a power MOSFET, which comprises a body diode 64 to allow current to pass in one direction. The diode 64 is not limited to a body diode and could be included as a separate electrical component connected in parallel to the electrical switch 62.

In normal operation of the wheelchair power flows from the battery 52, through the poly fuses 90 and 92, through the load 54, through the electrical switch 62, through the sense resistor 58 and back to the battery 52. The current flowing through the sense resistor 58 generates a voltage described by Ohm's law and provides an output current "AMPS SENSE", which is fed into the control section 30. For clarity of presentation, the connection between the sense resistor 58 and the control section is not illustrated and it should be understood that the connection point 94(A) on the right hand side of the power section 32 is electrically connected to the AMPS SENSE input 94(B) on the left hand side of the control section 30 as illustrated in the circuit diagram.

In addition to the current pathway described above, the power section comprises a low side pre-charge circuit which provides a controlled constant current path in series with a low capacity resettable fuse 120 that is used to provide the initial charge for the system. The controlled constant current path is formed from resistor 124 and MOSFET 122 connected in parallel to Zener diode 126, which operates in reverse bias and acts in combination with the MOSFET 122 to regulate the current that is output by the constant current path. If a cable fault is present the pre-charge current never drops back below the pre-charge threshold and eventually the low capacity resettable fuse 120 trips. Therefore the fault lockout is not released and the low side path switch is prevented from becoming enabled.

The control section 30 comprises an initial low pass filter and amplification stage. The low pass filter comprises resistor 102 and capacitor 104. In this embodiment the capacitor is a C₁₀₄=100 pF capacitor and the resistor is a R₁₀₂=1 kΩ resistor. The resulting cut off frequency for the low pass filter is given by f_{c}=1/(2πR₁₀₂C₁₀₄). The cut off frequency is chosen to eliminate input noise whilst allowing a signal indicating a rapid increase in current to pass. In particular, the cut off frequency must be chosen such that 1/f_{c} is less than the required response time of the smart fuse. The output from the low pass filter is fed into the amplification circuit which comprises a first operational amplifier 96 set up as a non-inverting amplifier. The amplification factor of the operational amplifier is determined by the feedback resistors 106 and 108. The amplification circuit is used to amplify the AMPS SENSE signal from the sense resistor.

After passing through the first operational amplifier 96, the signal then passes through a second operational amplifier 98 which is configured as an inverting operational amplifier with amplification determined by feedback resistor 110 and input resistor 112. The output from the second operational amplifier 98 is passed to a third operational amplifier 100 that is set up as a comparator circuit. The output of operational amplifier 100 takes a first value if the input from the second operational amplifier 98 is higher than a reference voltage and the operational amplifier 100 takes a second value if the input from the second operational amplifier 98 is lower than the reference voltage. The reference voltage is generated from the 8V STBY source 114 fed through the voltage divider circuit comprising resistors 116 and 118. The output from the operational amplifier 100 is used to drive the electrical switch 62. Hence, if the output of the operational amplifier 100 takes the first value then it has been detected that the current through the sense resistor 58 is above a threshold and the output of the operational amplifier 100 controls the electrical switch 62 such that the electrical switch 62 is in the second state in which current flow is suppressed. If the output of the operational amplifier 100 takes the second value then it has been detected that the current through the sense resistor 58 is below a threshold and the output of the operational amplifier 100 controls the electrical switch 62 such that the electrical switch 62 is in the first state in which current is allowed to flow.

Also illustrated in Fig. 8 is the microcontroller interface. The system is designed to offer automatic protection in hardware. However, software can also control some of the functionality for monitoring, configuration, and test purposes. The threshold current is set in hardware by resistors 116 and 118 in combination with voltage source 114. However, the SMART FUSE CONTROL signal 128 can be used to override the natural threshold level and drive the threshold as low as 1A or as high as 40A. The threshold can be driven higher still at which point the overcurrent protection is disabled. The SMART FUSE STATUS output 130 has two functions. Firstly it can be used as an analogue to digital convertor input to the microcontroller to detect whether the smart fuse is in the monitoring state or whether it has tripped. Secondly, it can be used as an output from the microcontroller to force a trip of the smart fuse. This can be used to test the functionality of the low side path switch. The REBUS CURRENT signal 132 is used as an analogue to digital converter input to the microcontroller to measure the current in the current pathway. This is primarily used for the test function to check the current measurement is accurate but the current pathway load current could also be monitored by the system if required. Further particular details of the electrical circuit are set out in the circuit diagram of Fig. 8.

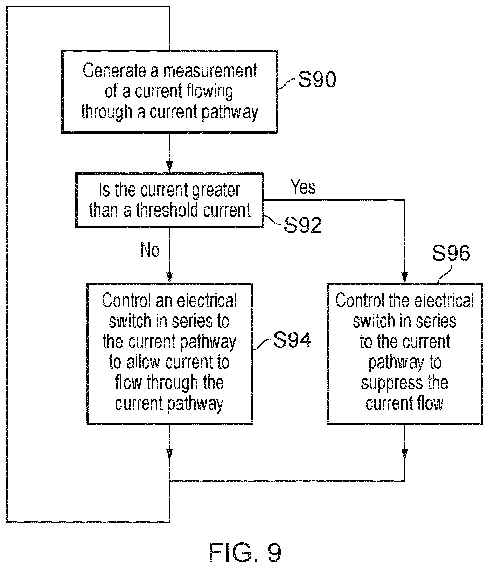

Fig. 9 shows a sequence of sequence of steps that are carried out in some of the embodiments of the present techniques. Flow starts at step S90, where a measurement of a current flowing through a current pathway is generated. The flow then proceeds to step S92, where it is determined whether the current is greater than a threshold current. If yes then the flow proceeds to step S96, where an electrical switch in series with the current pathway is switched to suppress the current flow before the flow proceeds back to step S90. Returning now to step S92, if it is determined that the current is not greater than a threshold current then the flow proceeds to step S94, where the electrical switch in series to the current pathway is switched to allow current to flow through the current pathway before the flow returns to step S90.

In brief overall summary, methods and circuitry for protecting control electronics of an electric wheelchair are disclosed. A measurement circuit generates a measurement of the current in a current pathway. Control circuitry switches an electrical switch from a first state which allows the current to flow to a second state which suppresses current flow in response to the measurement of the current exceeding a threshold current for more than a predetermined trip time. A trip time taken between the measurement of the current reaching the threshold current and the electrical switch changing from the first state to the second state is less than 100 microseconds and the threshold current is greater than 8 Amperes.

Various example configurations of the present disclosure are set out in the following numbered clauses:
Clause 1. Protection circuitry for control electronics of an electric wheelchair comprising:
   a current pathway configured to conduct a current;
   a measurement circuit configured to generate a measurement of the current;
   an electrical switch, connected in series to the current pathway, having a first state in which the current can flow through the electrical switch and a second state in which current flow through the switch is suppressed; and
   control circuitry configured to switch the electrical switch from the first state to the second state in response to the measurement of the current exceeding a threshold current for more than a predetermined trip time,
   wherein a trip time taken between the measurement of the current reaching the threshold current and the electrical switch changing from the first state to the second state is less than 100 microseconds, and
   wherein the threshold current is greater than 8 Amperes.
Clause 2. The protection circuitry of clause 1, further comprising a fuse connected in series with the current pathway,
   wherein the fuse is configured to break the circuit when the current in the current pathway passes a further threshold current for a slow trip time, and
   wherein the trip time is substantially shorter than the slow trip time.
Clause 3. The protection circuitry of any preceding clause, wherein the control circuitry comprises a threshold setting input, wherein the threshold current is dependent on the threshold setting input.
Clause 4. The protection circuitry of any preceding clause, wherein when in the second state the electrical switch is configured to suppress current flow in the current pathway in a first direction and to permit current flow in the current pathway in a second direction.
Clause 5. The protection circuitry of any preceding clause, wherein the control circuitry is configured, when the measurement of the current changes from a value below the threshold current to a value above the threshold current, to hold the electrical switch in the first state in response to one or more predefined conditions being true.
Clause 6. The protection circuitry of clause 5, wherein the one or more conditions comprise an initialisation phase of the protection circuitry.
Clause 7. The protection circuitry of clause 5 or clause 6, wherein the control circuitry is configured, when the measurement of the current changes from the value below the threshold current to the value above the threshold current, to hold the electrical switch in the first state for a first predefined period of time.
Clause 8. The protection circuitry of any preceding clause, wherein the control electronics is a modular control system comprising a plurality of modules,
   wherein each of the plurality of modules is user-selectably connected to at least one other of the plurality of modules via one or more cables external to each of the plurality of modules,
   wherein each cable of the one or more cables comprises a plurality of electrically isolated conductive pathways, a first connector and a second connector, wherein the first connector and the second connector are electrically connected at opposing ends of the cable to the plurality of electrically isolated conductive pathways, and
   wherein the current pathway is provided by at least one electrically isolated conductive pathway of the plurality of electrically isolated conductive pathways.
Clause 9. The protection circuitry of clause 8, wherein the trip time and threshold current are such that no substantive melting of insulation material between the plurality of electrically isolated conductive pathways occurs for: currents below the threshold current, and for transient current spikes lasting for less than the trip time.
Clause 10. The protection circuitry of any preceding clause, wherein the control circuitry is further configured, in response to switching the electrical switch from the first state to the second state, to hold the electrical switch in the second state for a second predefined period of time.
Clause 11. The protection circuitry of any preceding clause, further comprising test circuitry configured to:
   apply a test current through the current pathway when the electrical switch is in the first state;
   generate a first test measurement of the test current;
   to set an error indication when the first test measurement is outside of a given tolerance of the test current; and
   to clear the error indication when the first test measurement is within a given tolerance of the test current.
Clause 12. The protection circuitry of clause 11, wherein the test circuitry is further configured to:
   apply the test current through the current pathway when the electrical switch is in the second state;
   generate a second test measurement of the test current;
   to set the error indication when the second test measurement is substantially non-zero; and
   to clear the error indication when the second test measurement is substantially zero.
Clause 13. The protection circuitry of clause 11 or clause 12, wherein the test circuitry is further configured to hold the electrical switch in the second state when the error indication is set.
Clause 14. The protection circuitry of any preceding clause, wherein the current pathway comprises a resistor and the measurement circuit is configured to generate the measurement of the current based on a voltage across the resistor when the current flows through the resistor, and
   wherein the control circuitry comprises:
   an amplification circuit configured to output an amplified voltage corresponding to the voltage across the resistor amplified by a predefined factor; and
   a comparator circuit configured to compare the amplified voltage with a known voltage corresponding to the threshold current,
   wherein the control circuitry is configured to control the electrical switch to be in the first state when the amplified voltage is less than the threshold voltage, and
   wherein the control circuitry is configured to control the electrical switch to be in the second state when the amplified voltage is greater than the threshold voltage.
Clause 15. The protection circuitry of clause 13, wherein the control circuitry is further configured such that the threshold voltage can be controlled based on one or more user defined parameters.
Clause 16. The protection circuitry of any preceding clause, wherein the measurement circuit is configured to generate the measurement of the current when the electric wheelchair is in an on state and when the electric wheelchair is in an off state.
Clause 17. The protection circuitry of any preceding clause, wherein the trip time is less than 30 microseconds.
Clause 18. The protection circuitry of any preceding clause, wherein the trip time is less than 20 microseconds.
Clause 19. The protection circuitry of any preceding clause, wherein the threshold current is greater than 15 Amperes.
Clause 20. The protection circuitry of any preceding clause, wherein the threshold current is greater than 17.5 Amperes.
Clause 21. A method of protecting control electronics of an electric wheelchair comprising:
   generating a measurement of a current flowing through a current pathway; and
   controlling an electrical switch, connected in series to the current pathway, to switch from a first state to a second state in response to the measurement of a current exceeding a threshold current for more than a predetermined trip time,
   wherein, when in the first state, the electrical switch allows current to flow, and when in the second state, the electrical switch suppresses the current flow,
   wherein a trip time taken between the measurement of the current reaching the threshold current and the electrical switch changing from the first state to the second state is less than 100 microseconds, and
   wherein the threshold current is greater than 8 Amperes.
Clause 22. Means for protecting control electronics of an electric wheelchair comprising:
   means for generating a measurement of a current flowing through a current pathway;
   means for controlling an electrical switch, connected in series to the current pathway, to switch from a first state to a second state in response to the measurement of a current exceeding a threshold current for more than a predetermined trip time,
   wherein, when in the first state, the electrical switch allows current to flow, and when in the second state, the electrical switch suppresses the current flow,
   wherein a trip time taken between the measurement of the current reaching the threshold current and the electrical switch changing from the first state to the second state is less than 100 microseconds, and
   wherein the threshold current is greater than 8 Amperes.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments have been described in detail herein with reference to the accompanying drawings, it is to be understood that the invention is not limited to those precise embodiments, and that various changes, additions and modifications can be effected therein by one skilled in the art without departing from the scope and spirit of the invention as defined by the appended claims. For example, various combinations of the features of the dependent claims could be made with the features of the independent claims without departing from the scope of the present invention.

## Claims

1. Protection circuitry for control electronics of an electric wheelchair comprising:
a current pathway configured to conduct a current;
a measurement circuit configured to generate a measurement of the current;
an electrical switch, connected in series to the current pathway, having a first state in which the current can flow through the electrical switch and a second state in which current flow through the switch is suppressed; and
control circuitry configured to switch the electrical switch from the first state to the second state in response to the measurement of the current exceeding a threshold current for more than a predetermined trip time,
wherein a trip time taken between the measurement of the current reaching the threshold current and the electrical switch changing from the first state to the second state is less than 100 microseconds, and
wherein the threshold current is greater than 8 Amperes.

2. The protection circuitry of claim 1, further comprising a fuse connected in series with the current pathway,
wherein the fuse is configured to break the circuit when the current in the current pathway passes a further threshold current for a slow trip time, and
wherein the trip time is substantially shorter than the slow trip time.

3. The protection circuitry of any preceding claim, wherein the control circuitry comprises a threshold setting input, wherein the threshold current is dependent on the threshold setting input.

4. The protection circuitry of any preceding claim, wherein when in the second state the electrical switch is configured to suppress current flow in the current pathway in a first direction and to permit current flow in the current pathway in a second direction.

5. The protection circuitry of any preceding claim, wherein the control circuitry is configured, when the measurement of the current changes from a value below the threshold current to a value above the threshold current, to hold the electrical switch in the first state in response to one or more predefined conditions being true.

6. The protection circuitry of claim 5, wherein the one or more conditions comprise an initialisation phase of the protection circuitry.

7. The protection circuitry of claim 5 or claim 6, wherein the control circuitry is configured, when the measurement of the current changes from the value below the threshold current to the value above the threshold current, to hold the electrical switch in the first state for a first predefined period of time.

8. The protection circuitry of any preceding claim, wherein the control electronics is a modular control system comprising a plurality of modules,
wherein each of the plurality of modules is user-selectably connected to at least one other of the plurality of modules via one or more cables external to each of the plurality of modules,
wherein each cable of the one or more cables comprises a plurality of electrically isolated conductive pathways, a first connector and a second connector, wherein the first connector and the second connector are electrically connected at opposing ends of the cable to the plurality of electrically isolated conductive pathways, and
wherein the current pathway is provided by at least one electrically isolated conductive pathway of the plurality of electrically isolated conductive pathways,
wherein the trip time and threshold current are such that no substantive melting of insulation material between the plurality of electrically isolated conductive pathways occurs for: currents below the threshold current, and for transient current spikes lasting for less than the trip time.

9. The protection circuitry of any preceding claim, wherein the control circuitry is further configured, in response to switching the electrical switch from the first state to the second state, to hold the electrical switch in the second state for a second predefined period of time.

10. The protection circuitry of any preceding claim, further comprising test circuitry configured to:
apply a test current through the current pathway when the electrical switch is in the first state;
generate a first test measurement of the test current;
to set an error indication when the first test measurement is outside of a given tolerance of the test current; and
to clear the error indication when the first test measurement is within a given tolerance of the test current,
wherein the test circuitry is further configured to hold the electrical switch in the second state when the error indication is set..

11. The protection circuitry of claim 10, wherein the test circuitry is further configured to:
apply the test current through the current pathway when the electrical switch is in the second state;
generate a second test measurement of the test current;
to set the error indication when the second test measurement is substantially non-zero; and
to clear the error indication when the second test measurement is substantially zero,
wherein the test circuitry is further configured to hold the electrical switch in the second state when the error indication is set..

12. The protection circuitry of any preceding claim, wherein the current pathway comprises a resistor and the measurement circuit is configured to generate the measurement of the current based on a voltage across the resistor when the current flows through the resistor, and
wherein the control circuitry comprises:
an amplification circuit configured to output an amplified voltage corresponding to the voltage across the resistor amplified by a predefined factor; and
a comparator circuit configured to compare the amplified voltage with a known voltage corresponding to the threshold current,
wherein the control circuitry is configured to control the electrical switch to be in the first state when the amplified voltage is less than the threshold voltage, and
wherein the control circuitry is configured to control the electrical switch to be in the second state when the amplified voltage is greater than the threshold voltage.

13. The protection circuitry of claim 12, wherein the control circuitry is further configured such that the threshold voltage can be controlled based on one or more user defined parameters.

14. The protection circuitry of any preceding claim, wherein the measurement circuit is configured to generate the measurement of the current when the electric wheelchair is in an on state and when the electric wheelchair is in an off state.

15. A method of protecting control electronics of an electric wheelchair comprising:
generating a measurement of a current flowing through a current pathway; and
controlling an electrical switch, connected in series to the current pathway, to switch from a first state to a second state in response to the measurement of a current exceeding a threshold current for more than a predetermined trip time,
wherein, when in the first state, the electrical switch allows current to flow, and when in the second state, the electrical switch suppresses the current flow,
wherein a trip time taken between the measurement of the current reaching the threshold current and the electrical switch changing from the first state to the second state is less than 100 microseconds, and
wherein the threshold current is greater than 8 Amperes.
